# EUROPEAN PATENT SPECIFICATION

(11) **EP 4 026 879 B1**
(45) Date of publication and mention of the grant of the patent: **26.08.2026**
(21) Application number: 21150953.4
(22) Date of filing: 11.01.2021
(51) Int. Cl.: C09J 7/20, C09J 7/30, H01F 27/32, H01F 41/12

(54) **SPACER TAPE, METHOD FOR MANUFACTURING A WINDING AND WINDING**
ABSTANDSBAND, VERFAHREN ZUR HERSTELLUNG EINER WICKLUNG SOWIE WICKLUNG
BANDE D'ESPACEMENT, PROCÉDÉ DE FABRICATION D'UN ENROULEMENT ET ENROULEMENT

(43) Date of publication of application: 13.07.2022
(73) Proprietor: Hitachi Energy Ltd, 8050 Zürich (CH)
(72) Inventor: BUSTREO, Gianluca, 30035 Mirano (IT); PERIN, Martina, 35010 Padova (IT); PAVANELLO, Paolo, 35040 Granze (IT); VALORI, Valentina, 35043 Monselice (IT); FORSLIN, Julia, 72460 Vasteras (SE); JOVALEKIC, Mark, 74740 Adelsheim (DE); GIRLANDA, Orlando, 72356 Västerås (SE); PLATEK, Robert, 32-400 Myslenice, Lesser (PL)
(74) Representative: Epping - Hermann - Fischer

(56) References cited:
- WO-A1-2019/238558
- WO-A1-2021/151610
- ANONYMOUS: "Adhesable - Definition and More from the Free Merriam-Webster Dictionary", MERRIAM WEBSTER ONLINE DICTIONARY, 28 May 2021 (2021-05-28), pages 1 - 5, XP055808585, Retrieved from the Internet <URL:https://www.merriam-webster.com/dictionary/adhesable> [retrieved on 20210528]
- ANONYMOUS: "Neologism", WIKIPEDIA, 19 July 2021 (2021-07-19), pages 1 - 6, XP055831640, Retrieved from the Internet <URL:https://en.wikipedia.org/wiki/Neologism> [retrieved on 20210811]

## Description

The present invention relates to a spacer tape, a method for manufacturing a winding and the winding.

Document WO 2019/238558 A1 describes a multiple parallel conductor with spacer plate and document WO 2021/151610 A1 describes a method and conductor structure for manufacturing an electric winding of an electromagnetic induction apparatus.

Windings and coils can be subjected to large electromagnetic forces in a longitudinal, a radial and a tangential direction of the winding. Depending on the winding itself, these forces can lead to distortions of the turns or even short-circuits in between the turns of the windings, unless measures have been taken into account for the design of the winding. Moreover, a challenge for windings in power transformers, which are subjected to huge electromagnetic forces, is the heat management to ensure enough cooling.

Exemplarily, spacer elements are located in between turns of the winding in order to space the turns of the windings apart and to form channels enabling a coolant to pass through the winding. Moreover, as the spacer also become a part of the structure of the winding, the precise arrangement of the spacer in the winding, and the robustness of the spacers are big factors which influences the stability and the endurance of the winding enormously.

A common method for manufacturing windings consists in winding a conductor so that the winding has a plurality of adjacent turns arranged along a longitudinal direction. Often the channels for the coolant are obtained by arranging spacer in between the turns of winding. During the winding process each of the spacers is usually inserted manually between turns. Hence, the rotation during the winding process has to be halted for at least each turn, or even for each spacer element.

As arranging or adhering the spacer elements manually during the winding process is very laborious, time consuming and even hazardous, more modern approaches try to use conductors, which already comprise spacers. The spacer elements might be fixed along a suitable lateral surface of the conductor intended to form the turns of the winding. Therefore, the spacer elements are arranged in between each turn automatically while winding the conductor making the manual process for arranging the spacer elements obsolete.

Nevertheless, a winding comprising a conductor with spacers most often can have stability issues as the spacers can be arranged relatively loose in between the turns. Especially tangential forces in the winding, which can shift adjacent turns of the winding relatively to each other and also the spacers, can threaten the stability of the winding and results in a reduced withstand power.

The above-illustrated technical issue may lead to a dangerous unbalancing condition of the overall winding, which may cause its collapse if subjected to large electromagnetic forces during operation.

The object of the present invention is to provide a spacer tape for a winding which allows the above-mentioned technical issues to be overcome, a winding and a method for manufacturing the winding.

This object is solved by the features of the independent claims.

A spacer tape is provided for spacing apart turns of a winding, which comprises a tape having an upper surface, a lower surface and a longitudinal axis, wherein the lower surface is adhesable and configured to be adhered to a conductor forming a turn of the winding, and spacers with an upper surface and a lower surface arranged on the tape, wherein the lower surface of the spacers is adhered to the upper surface of the tape, and wherein the upper surface of the spacers are adhesable and configured to be adhered to the conductor forming an adjacent turn of the winding, wherein the spacers comprise a bonding element at the upper surface and the lower surface, and wherein the dimension of the bonding elements in a direction perpendicular to the longitudinal axis is larger than the dimension of the tape.

Since the lower surface of the tape is adhesable, the tape can be conveniently applied to a conductor a winding is formed with. The spacer is adhered to the tape, thereby fixing the position and the orientation of the spacer on the tape and also on the conductor later by. Hence, no deviation in the location of the spacers in the winding arise and the design of the winding becomes as intendent. The adhesable upper surface of the spacers adhere to an adjacent turn of the winding, after the winding is formed by the conductor. Therefore, because the tape is configured to adhere adjacent turns of the winding, a winding utilizing the spacer tape can withstand high voltages and high power by counteracting tangential forces induced by the winding itself.

The spacers may be arranged on the tape equidistantly along the longitudinal axis. A distance between the spacers can be an integral fraction of the circumference of the winding. Hence, the spacers are arranged along the longitudinal direction of the winding stabilizing the winding against longitudinal forces of the winding. As an example, 6, 8, 12 or 24 spacers can be placed along the circumference of the winding. By adhering the spacer upfront on the tape, before the winding is wound, no deviation of the spacers in the winding is to be expected, leading to the intended robust arrangement of the spacers in the winding.

The spacer can comprise materials based on cellulose fiber or materials based on a polymer. Materials based on cellulose are, for example, used for windings, wherein oil is used as a coolant. As a polymer material, a thermoplastic polymer, e.g. polyetherimide, can be employed, because such a material combines high strength and rigidity, even at elevated temperatures, with long term heat resistance. It should be noted that materials based on polymer can withstand higher tangential forces in the winding compared to cellulose based ones.

Moreover, the spacers may comprise a bonding element at the upper surface and the lower surface. The bonding element may be configured to adhere and to bond the spacers to the conductor. It also may be flat to avoid any detrimental effects on the characteristics of the spacers, as the rigidness. The bonding elements themselves may be adhesable to add them, or to attach the spacers on the tape or the conductor. The bonding elements can additionally be adhered to the spacer element by an adhesive or a UV curable adhesive film. If the bonding element is mouldable, the spacer can be bond to the tape or the conductor by thermal processing or curing.

For example, the bonding element can comprise a polymer. Most polymers are mouldable at high temperatures, such that the spacer can be bonded to the conductor with a thermal curing process. If the spacer comprises a polymer and the bonding element comprises a polymer, the spacer can be remarkably durable as the bonding elements adhere well. Likewise, as polymers often have similar thermal expansion coefficients, thermally induced tension between the spacer and the bonding element can be minimized.

Besides, the bonding elements may comprise a reinforcement material. Particularly if the bonding element is polymer based, a reinforcement material can enhance the rigidness and stiffness of the bonding element as well as of the spacers. Suitable reinforcement materials are fibres made out of glass, carbon, basalt or aramid.

The dimension of the bonding elements in a direction perpendicular to the longitudinal axis of tape are larger than the dimension of the tape. Hence, the bonding elements protrude from the sides of the tape and can bond directly to the conductor the tape if adhered to, while being fixed locally by the tape.

The bonding elements can have a distance of at least 1 mm to the edge of the spacers in order to ensure a sufficient safety distance from the bonding elements to the edge of the spacers to avoid spout of any adhesive or of the bonding element, which in turn could compromise the insulation on the conductor or of the winding.

The upper surface of the tape can be adhesable, whereby the spacers may be adhered to the tape by the adhesable upper surface of the tape, or the spacers can be adhered to the tape by an adhesive applied to the lower surface of spacers. The adhesable upper surface of the tape can be realized by an adhesive layer on the tape. For fixing the spacer to the tape, the spacer conveniently has to be arranged on it. For fixing the spacer to the tape by an adhesive, the adhesive is first applied to the lower surface of the spacers, which is then positioned on the tape. A benefit of applying the spacer on the tape by an adhesive is that the exact position of the spacer on the tape can be corrected awhile after the placement.

Furthermore, a removable protective layer can be arranged on the upper surface of the spacers. In this way the adhesable upper surface of the spacer, but also the whole spacer tape, is protected from environmental influences, e.g. as dust. Accordingly the spacer tape can be transported conveniently to the manufacturing place of the winding and be applied to the conductor.

The spacers may comprise an UV curable adhesive film. The UV curable adhesive film may be arranged directly on the spacers or on a bonding element. The UV curable adhesive film can be fixed to the spacer by arranging the UV curable adhesive film on the spacer and curing the UV curable adhesive film at the edges or corners. In a further step the spacer comprising the UV curable adhesive film can be adhered to the tape by UV curing a spot on the UV curable adhesive film, that has not been cured before, and that the tape is arranged on, e.g. in the middle of the spacer.

An advantage of the spacer tape is the method for manufacturing a winding. Compared to common methods for manufacturing winding, in which each of the spacer elements have to be inserted manually between each pair of adjacent turns, the presented method is faster and more efficient, as halting the winding process is not necessary due to the spacers already adhered to the conductor. Moreover, as the spacer tape can be manufactured apart from the winding, the spacer tape can be produced under more controlled conditions.

The method for manufacturing a winding, comprises the following steps:
a) Arranging a spacer tape according to an embodiment described above on a conductor such that an adhesable lower surface of the tape is adhered to the conductor;
b) Winding of the conductor forming the turns of the winding such that the spacers are arranged in between adjacent turns of the winding and are adhered to the adjacent turn of the winding.

Additionally, the method for manufacturing the winding can comprise the additional following step:
c) Thermal curing of the winding such that the spacers bond to the adjacent turns.

Applying a thermal curing process to the winding can be in particular interest, if the spacers comprise bonding elements that are curable or if the spacer themselves can be bonded over a thermal curing process. During thermal curing the spacer can bond to the conductor at adjacent runs of the winding. Such a winding can withstand higher voltages and stronger forces, especially tangential.

A winding manufactured by the method above comprises a conductor, forming at least two adjacent turns of the winding, and a spacer tape as described above, wherein the spacer tape is arranged in between the adjacent turns such that the spacer tape is adhered to both adjacent turns.

Also, the spacer tape may be bonded to adjacent turns of the winding. Therefore, the whole winding is more robust and can withstand stronger electromagnetic forces, and as a result also higher electrical energy.

In the following the invention is described based on embodiments with reference to the figures. Same parts or parts with equivalent effect are referred to by the same reference numbers.

The figures serve solely to illustrate the invention and are therefore only schematic and not drawn to scale. Some parts may be exaggerated or distorted in the dimensions. Therefore, neither absolute nor relative dimensions can be taken from the figures. Identical or identically acting parts are provided with the same reference numerals.
- Figure 1: shows a plain view of a bonding element, on which an adhesive is applied;
- Figure 2: shows a plain view of an upper surface and a lower surface of a spacer;
- Figure 3: shows a plain view of a lower surface of a spacer, on which an UV curable adhesive film is applied;
- Figure 4: shows a plain view of an embodiment of spacer tape;
- Figure 5: shows a plain view of a spacer tape, on which a protective layer is arranged;
- Figure 6: shows an alternative embodiment, wherein an UV curable adhesive film is used;
- Figure 7: shows a plain view of a spacer tape, wherein an UV curable adhesive film is used;
- Figure 8: shows a winding comprising a spacer tape.

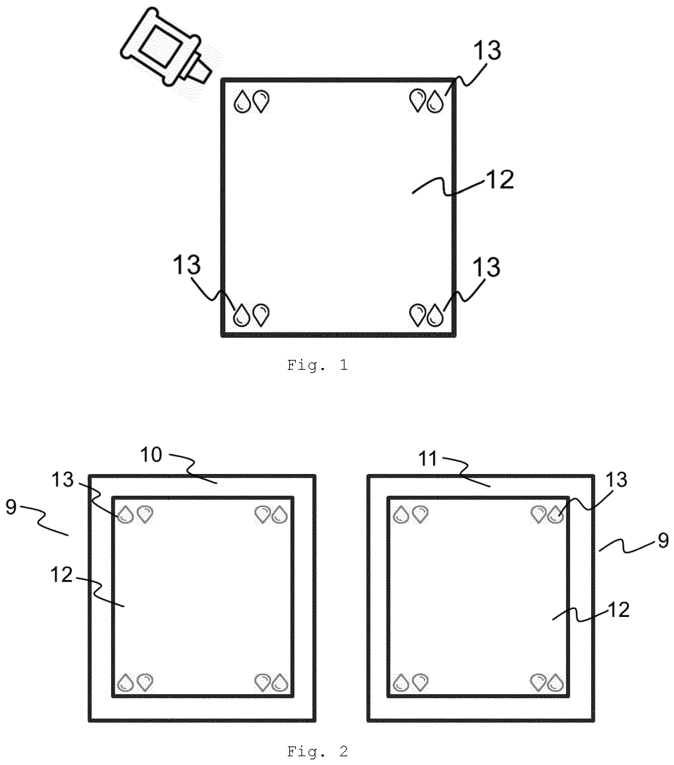

Figure 1 shows a plain view of a bonding element 12, on which an adhesive 13 is applied. The adhesive 13 is applied to the four corners of the rectangular bonding element 12 in order to fix the bonding element 12 to a spacer 9 later on. The adhesive 13 can be an instantaneous glue, but also could be any other glue or paste having good adhesive properties on the surface of the bonding element 12 facing the spacers 9.

The bonding element 12 consists of epoxy and can be reinforced with glass fibers to enhance the stability of the bonding elements 12. Under usual conditions, e.g. room temperature, the bonding element 12 is stiff. Thus, it becomes sticky under thermal processing. Therefore, the bonding elements 12 can be employed to bond to a conductor 6 by a thermal curing.

Figure 2 shows a plain view of an upper surface 10 and a lower surface 11 of the spacer 9 after the bonding elements 12 have been adhered to the spacers 9 by the adhesive 13 dispensed at the corners of the bonding element 13. A safety distance of the bonding element 12 to the edges of the spacers 9 of at least 1 mm is maintained in order to avoid the adhesive 13 to be spilled on the conductor 6 later on, which could compromise the insulation of the conductor or of the winding.

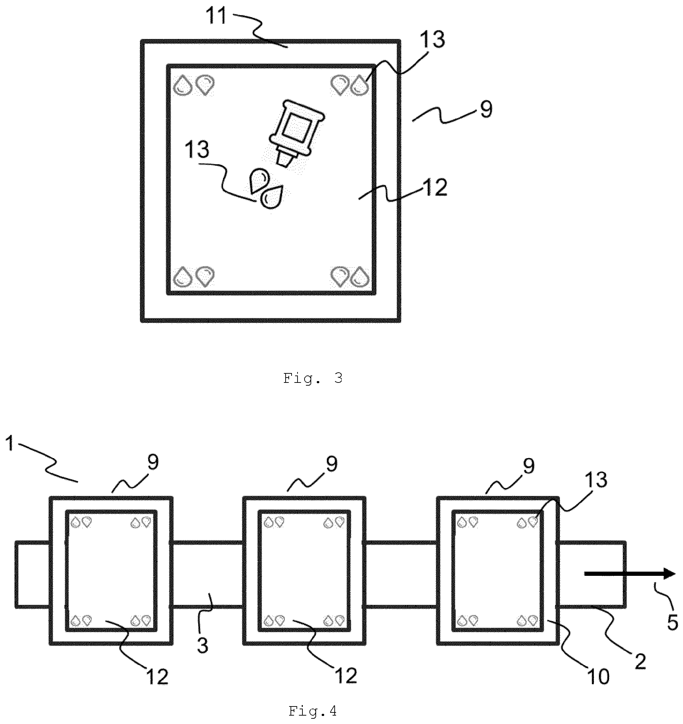

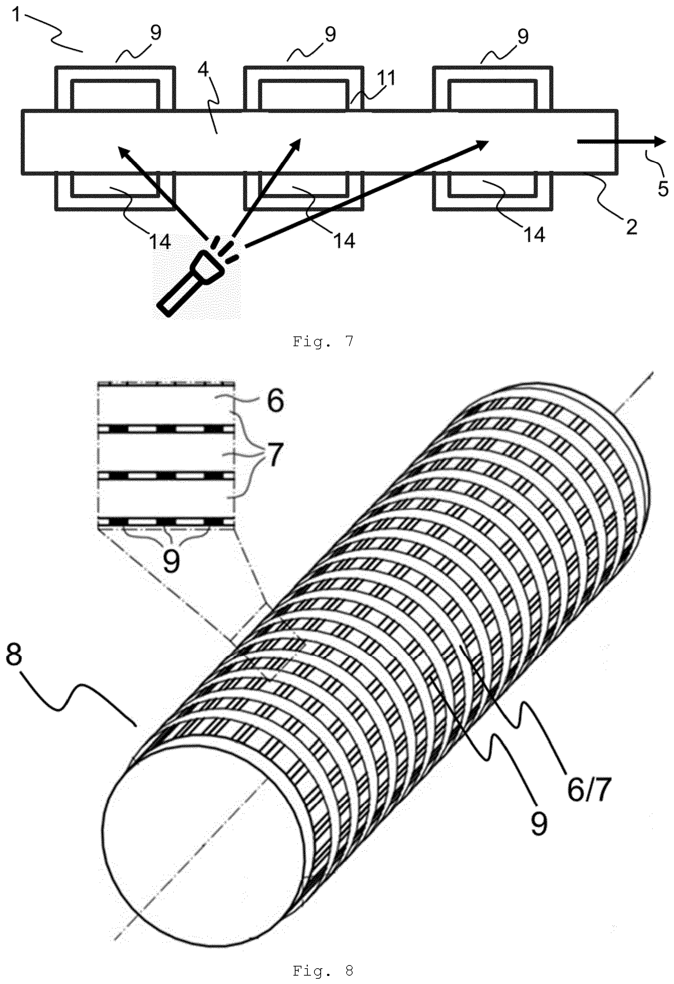

In figure 3 a plain view of the lower surface 11 of the spacer 9 is displayed, on which the adhesive 13 is applied in the middle of the bonding element 12. Hence, after positioning a tape 2 as shown in figure 4, comprising an adhesable lower surface 4 as shown in figure 7, on a planar surface, the spacer can be fixed to a no-adhesable upper surface 3 of the tape 2 by the adhesive 13 in the middle of the bonding element 12. Alternatively, the upper surface 3 of the tape 2 can be adhesable, for example by an adhesive layer, such that the spacers 9 can be fixed to the tape 2 without an additional adhesive 13 by arranging them directly on the tape 2.

Figure 4 shows a plain view of an embodiment of a spacer tape 1. The spacers 9 are adhered to the upper surface 3 of the tape 2 equidistantly. The distance between the spacers 9 along a longitudinal axis 5 of the tape 2 is a natural fraction of a circumference of a winding 8 as shown in figure 8, the spacer tape 1 is used in. In this way, it is ensured that the spacers 9 are stacked on top of each other in the winding 8, whereby turns 7 of the winding 8 are positioned between them. The dimension of the bonding elements 13 in a direction perpendicular to the longitudinal axis 5 of tape 2 are larger than the dimension of the tape 2 in this direction. Consequently, as the spacer are centered on the tape2, the bonding elements 13 protrude from the tape 2 on two sides. Therefore, after the spacer tape 2 is adhere to the conductor 6 as shown in figure 8, the bonding elements 12 can bond directly to the conductor 6 at the area without tape 2, while being secured in position by the tape 2.

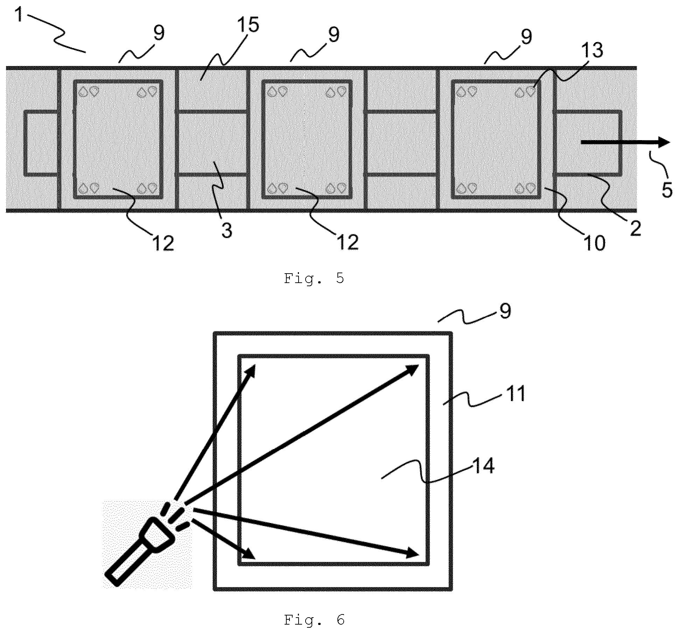

In figure 5 the spacer tape 1 is shielded by a protective layer 15 which is arranged on the upper surface 11 of the spacer 9. The protective layer 15, which can be a plastic layer, conserves the adhesive property of the upper surface 11 of the spacer 9 from any dirt or dust. Moreover, protected by the protective layer 15, the spacer tape 1 can be easily transported.

Figure 6 shows a plain view of a lower surface 11 of a spacer 9, on which an UV curable adhesive film 14, in contrary to the bonding element 12, is applied to make the lower surface 11 of the spacer 9 adhesable. The UV curable adhesive film 14 is fixed to the spacer by curing the UV curable adhesive film 14 just at the corners. The middle of the UV curable adhesive film 14 is omitted at this step to adhere the spacer 9 on the tape 2 over the UV curable adhesive film 14, as indicated in figure 7.

Figure 8 shows the winding 8 comprising the spacer tape 1. The spacer tape 1 has been adhered to the conductor 6, after which the conductor 7 was wound to form the turns 7 of the winding 8, such that the spacers 9 are arranged in between them to space the turns 7 apart. Thereafter, the whole winding 8 has been subjected to a thermal curing process, whereby the spacers 9 bond to both adjacent turns 7. As a consequence the winding 8 is an integral electrical component formed by the conductor 6 and the spacer tape 1 that can withstand much larger electromagnetic forces compared to conventional spacers-type windings 8.

### List of used reference symbols:

- 1: Spacer tape
- 2: Tape
- 3: Upper surface of tape
- 4: Lower surface of tape
- 5: Longitudinal axis of tape
- 6: Conductor
- 7: Turn
- 8: Winding
- 9: Spacer
- 10: Upper surface of spacer
- 11: Lower surface of spacer
- 12: Bonding element
- 13: Adhesive
- 14: UV curable adhesive film
- 15: Protective layer

## Claims

1. A spacer tape (1) for spacing apart turns (8) of a winding (9) comprising,
- a tape (2) having an upper surface (3), a lower surface (4) and a longitudinal axis (5),
wherein the lower surface (4) is adhesable and configured to be adhered to a conductor (6) forming a turn (7) of the winding (8), and
- spacers (9) with an upper surface (10) and a lower surface (11) arranged on the tape (2),
wherein the lower surface (11) of the spacers (9) is adhered to the upper surface (3) of the tape (2),
wherein the upper surface (10) of the spacers (9) are adhesable and configured to be adhered to the conductor (6) forming an adjacent turn (7) of the winding (8),
wherein the spacers (9) comprise a bonding element (12) at the upper surface (3) and the lower surface (4), and
wherein the dimension of the bonding elements (12) in a direction perpendicular to the longitudinal axis (5) is larger than the dimension of the tape (2).

2. Spacer tape (1) according to claim 1,
wherein the spacers (9) are arranged on the tape (2) equidistantly along the longitudinal axis (5).

3. Spacer tape (1) according to one of the previous claims,
wherein the spacers (9) comprise materials based on cellulose fiber or materials based on a polymer.

4. Spacer tape (1) according to one of the previous claims,
wherein the bonding elements (12) comprise a polymer.

5. Spacer tape (1) according to one of the previous claims, wherein the bonding elements (12) comprise a reinforcement material.

6. Spacer tape (1) according to one of the previous claims,
wherein the bonding elements (12) have a distance of at least 1 mm to the edge of the spacers (9).

7. Spacer tape (1) according to one of the previous claims,
wherein the upper surface (of the tape (2) is adhesable, and
wherein the spacers (9) are adhered to the tape (2) by the adhesable upper surface (3) of the tape (2), or
wherein the spacers (9) are adhered to the tape (2) by an adhesive (13) applied to the lower surface (11) of the spacers (9).

8. Spacer tape (1) according to one of the previous claims,
wherein the spacers (9) comprise an UV curable adhesive film (14).

9. Spacer tape (1) according to one of the previous claims,
wherein a removable protective layer (15) is arranged on the upper surface of the spacers (9).

10. Method for manufacturing a winding comprising the following steps:
a) Arranging a spacer tape (1) according to one of the claims 1 to 9 on a conductor (6) such that an adhesable lower surface (11) of the tape (2) is adhered to the conductor (6);
b) Winding of the conductor (6) forming the turns (7) of the winding (8) such that the spacers (9) are arranged in between adjacent turns (7) of the winding (8) and are adhered to the adjacent turn (7) of the winding (8).

11. Method for manufacturing a winding (8) according to claim 10 comprising the additional following steps:
c) Thermal curing of the winding (8) such that the spacers (9) bond to the adjacent turns (7).

12. A winding (8) comprising,
- a conductor (6) forming at least two adjacent turns (7) of the winding (8),
- a spacer tape (1) according to one of the previous claims 1 to 9,
wherein the spacer tape is arranged in between the adjacent turns (7) such that the spacer tape (1) is adhered to both adjacent turns (7).

13. A winding (8) according to the previous claim,
wherein the spacer tape (1)is bonded to both adjacent turns (7).

## Patentansprüche

1. Abstandsband (1) zum Beabstanden von Windungen (8) einer Wicklung (9), umfassend:
- ein Band (2) mit einer oberen Fläche (3), einer unteren Fläche (4) und einer Längsachse (5),
wobei die untere Fläche (4) klebfähig und ausgelegt ist, an einem Leiter (6) angeklebt zu werden, der eine Windung (7) der Wicklung (8) bildet, und
- Abstandshalter (9) mit einer oberen Fläche (10) und einer unteren Fläche (11), die auf dem Band (2) angeordnet sind,
wobei die untere Fläche (11) der Abstandshalter (9) an der oberen Fläche (3) des Bandes (2) angeklebt ist,
wobei die obere Fläche (10) der Abstandshalter (9) klebfähig und ausgelegt ist, an dem Leiter (6) angeklebt zu werden, der eine benachbarte Windung (7) der Wicklung (8) bildet,
wobei die Abstandshalter (9) ein Verbindungselement (12) an der oberen Fläche (3) und der unteren Fläche (4) umfassen, und wobei die Abmessung der Verbindungselemente (12) in einer Richtung senkrecht zu der Längsachse (5) größer als die Abmessung des Bandes (2) ist.

2. Abstandsband (1) nach Anspruch 1,
wobei die Abstandshalter (9) äquidistant entlang der Längsachse (5) auf dem Band (2) angeordnet sind.

3. Abstandsband (1) nach einem der vorstehenden Ansprüche,
wobei die Abstandshalter (9) Materialien auf Basis von Cellulosefasern oder Materialien auf Basis eines Polymers umfassen.

4. Abstandsband (1) nach einem der vorstehenden Ansprüche,
wobei die Verbindungselemente (12) ein Polymer umfassen.

5. Abstandsband (1) nach einem der vorstehenden Ansprüche,
wobei die Verbindungselemente (12) ein Verstärkungsmaterial umfassen.

6. Abstandsband (1) nach einem der vorstehenden Ansprüche,
wobei die Verbindungselemente (12) einen Abstand von mindestens 1 mm zum Rand der Abstandshalter (9) aufweisen.

7. Abstandsband (1) nach einem der vorstehenden Ansprüche,
wobei die obere Fläche (des Bandes (2) klebfähig ist, und
wobei die Abstandshalter (9) durch die klebfähige obere Fläche (3) des Bandes (2) an dem Band (2) angeklebt sind, oder
wobei die Abstandshalter (9) durch einen Klebstoff (13), der auf die untere Fläche (11) der Abstandshalter (9) aufgebracht ist, an dem Band (2) angeklebt sind.

8. Abstandsband (1) nach einem der vorstehenden Ansprüche,
wobei die Abstandshalter (9) einen UV-härtbaren Klebstofffilm (14) umfassen.

9. Abstandsband (1) nach einem der vorstehenden Ansprüche,
wobei eine entfernbare Schutzschicht (15) auf der oberen Fläche der Abstandshalter (9) angeordnet ist.

10. Verfahren zum Herstellen einer Wicklung, umfassend die folgenden Schritte:
a) Anordnen eines Abstandsbandes (1) nach einem der Ansprüche 1 bis 9 auf einem Leiter (6), so dass eine klebfähige untere Fläche (11) des Bandes (2) an dem Leiter (6) angeklebt ist;
b) Wickeln des die Windungen (7) der Wicklung (8) bildenden Leiters (6), so dass die Abstandshalter (9) zwischen benachbarten Windungen (7) der Wicklung (8) angeordnet und an der benachbarten Windung (7) der Wicklung (8) angeklebt sind.

11. Verfahren zum Herstellen einer Wicklung (8) nach Anspruch 10, umfassend die folgenden zusätzlichen Schritte:
c) thermisches Aushärten der Wicklung (8), so dass die Abstandshalter (9) mit den benachbarten Windungen (7) verbunden werden.

12. Wicklung (8), umfassend:
- einen Leiter (6), der mindestens zwei benachbarte Windungen (7) der Wicklung (8) bildet,
- ein Abstandsband (1) nach einem der vorstehenden Ansprüche 1 bis 9,
wobei das Abstandsband zwischen den benachbarten Windungen (7) angeordnet ist, so dass das Abstandsband (1) an beiden benachbarten Windungen (7) angeklebt ist.

13. Wicklung (8) nach dem vorstehenden Anspruch,
wobei das Abstandsband (1) mit beiden benachbarten Windungen (7) verbunden ist.

## Revendications

1. Ruban d'espacement (1) destiné à espacer de spires (8) d'un enroulement (9), comprenant :
- un ruban (2) présentant une surface supérieure (3), une surface inférieure (4) et un axe longitudinal (5),
la surface inférieure (4) pouvant être collée et étant configurée pour être collée à un conducteur (6) formant une spire (7) de l'enroulement (8), et
- des espaceurs (9) dotés d'une surface supérieure (10) et d'une surface inférieure (11) agencés sur le ruban (2),
dans lequel la surface inférieure (11) des espaceurs (9) est collée à la surface supérieure (3) du ruban (2),
dans lequel la surface supérieure (10) des espaceurs (9) peut être collée et est configurée pour être collée au conducteur (6) formant une spire (7) adjacente de l'enroulement (8),
dans lequel les espaceurs (9) comprennent un élément de liaison (12) au niveau de la surface supérieure (3) et de la surface inférieure (4), et
dans lequel la dimension des éléments de liaison (12) dans une direction perpendiculaire à l'axe longitudinal (5) est supérieure à la dimension du ruban (2).

2. Ruban d'espacement (1) selon la revendication 1,
dans lequel les espaceurs (9) sont agencés sur le ruban (2) à égale distance les uns des autres le long de l'axe longitudinal (5).

3. Ruban d'espacement (1) selon l'une des revendications précédentes,
dans lequel les espaceurs (9) comprennent des matériaux à base de fibre de cellulose ou des matériaux à base de polymère.

4. Ruban d'espacement (1) selon l'une des revendications précédentes,
dans lequel les éléments de liaison (12) comprennent un polymère.

5. Ruban d'espacement (1) selon l'une des revendications précédentes,
dans lequel les éléments de liaison (12) comprennent un matériau de renforcement.

6. Ruban d'espacement (1) selon l'une des revendications précédentes,
dans lequel les éléments de liaison (12) présentent une distance d'au moins 1 mm par rapport au bord des espaceurs (9).

7. Ruban d'espacement (1) selon l'une des revendications précédentes,
dans lequel la surface supérieure (du ruban (2) peut être collée, et
dans lequel les espaceurs (9) sont collés au ruban (2) par la surface supérieure (3) pouvant être collée du ruban (2), ou
dans lequel les espaceurs (9) sont collés au ruban (2) par un adhésif (13) appliqué sur la surface inférieure (11) des espaceurs (9).

8. Ruban d'espacement (1) selon l'une des revendications précédentes,
dans lequel les espaceurs (9) comprennent un film adhésif (14) durcissable sous rayonnement ultraviolet.

9. Ruban d'espacement (1) selon l'une des revendications précédentes,
dans lequel une couche de protection amovible (15) est agencée sur la surface supérieure des espaceurs (9).

10. Procédé de fabrication d'un enroulement, comprenant les étapes suivantes :
a) agencement d'un ruban d'espacement (1) selon l'une des revendications 1 à 9 sur un conducteur (6), de telle sorte qu'une surface inférieure (11) du ruban (2) pouvant être collée soit collée sur le conducteur (6) ;
b) enroulement du conducteur (6) formant les spires (7) de l'enroulement (8), de telle sorte que les espaceurs (9) soient agencés entre des spires (7) adjacentes de l'enroulement (8) et soient collés à la spire (7) adjacente de l'enroulement (8).

11. Procédé de fabrication d'un enroulement (8) selon la revendication 10, comprenant l'étape supplémentaire suivante :
c) durcissement thermique de l'enroulement (8), de telle sorte que les espaceurs (9) soient liés aux spires (7) adjacentes.

12. Enroulement (8), comprenant :
- un conducteur (6) formant au moins deux spires (7) adjacentes de l'enroulement (8),
- un ruban d'espacement (1) selon l'une des revendications 1 à 9 précédentes,
dans lequel le ruban d'espacement est agencé entre les spires (7) adjacentes de telle sorte que le ruban d'espacement (1) soit collé aux deux spires (7) adjacentes.

13. Enroulement (8) selon la revendication précédente,
dans lequel le ruban d'espacement (1) est lié aux deux spires (7) adjacentes.
